# EUROPÄISCHE PATENTSCHRIFT

(11) **EP 2 062 639 B1**
(45) Veröffentlichungstag und Bekanntmachung des Hinweises auf die Patenterteilung: **05.05.2010**
(21) Anmeldenummer: 08019100.0
(22) Anmeldetag: 31.10.2008
(51) Int. Cl.: B01D 53/86

(54) **Zersetzung von Distickstoffmonoxid in sauerstoffhaltigen Gasen mit Feuchtegehalt**
Decomposition of nitrous oxide into humid gases containing oxygen
Décomposition d'oxyde nitreux dans des gaz humides contenant de l'oxygène

(30) Priorität: 26.11.2007 DE 102007057109
(43) Veröffentlichungstag der Anmeldung: 27.05.2009
(73) Patentinhaber: W.C. Heraeus GmbH, 63450 Hanau (DE)
(72) Erfinder: Koch, Stefan, 63571 Gelnhausen (DE); Kiemel, Rainer Dr., 63505 Langenselbold (DE); Przibilla, Gabrielle, 63456 Hanau (DE)
(74) Vertreter: Kühn, Hans-Christian

(56) Entgegenhaltungen:
- DE-A1- 3 543 640
- DE-A1-102004 024 026
- US-A1- 2003 053 944

## Beschreibung

Die Erfindung betrifft die Zersetzung von z.B. in Narkosegasen enthaltenem Distickstoffmonoxid in sauerstoffhaltigen Gasen mit Feuchtegehalt.

Es werden unterschiedliche Narkosegase in der Anästhesie eingesetzt, die die Umwelt belasten. Insbesondere Lachgas (als Trägergas) und Isofluran haben eine ozonzerstörende Wirkung und tragen zum Treibhauseffekt bei. Lachgas ist etwa 300-mal klimaschädlicher als Kohlendioxid. Vorrichtungen zur Lachgaszerstörung werden daher nicht nur bei chemischen Prozessen, sonder auch zur Reinigung der Abluft von Krankenhäusern benötigt.

Ru oder Pd auf SiO₂ oder Al₂O₃ dienen gemäß JP 2002253967 A1 zur Zerstörung von Lachgas, das als Narkosegas überschüssig ist. Entsprechende Reaktoren sind Stahlrohre, die mit edelmetallbeschichteten Al₂O₃-Körnern gepackt sind und bei 150 bis 550 °C betrieben werden (JP 55031463 A1). Die Zersetzung von Lachgas in Feuchtigkeit oder ausgeatmete Luft enthaltenden Gasgemischen ist nicht beschrieben.

W00268117A1 beschreibt Katalysatoren zur Zersetzung überschüssigen Narkosegases. Die Zersetzung von Lachgas in Atemluft oder Feuchtigkeit enthaltenden Gasgemischen ist nicht beschrieben. Die aus JP2002253967A1 bekannten Al₂O₃-Trägermaterialien werden als weniger geeignet beschreiben als die beanspruchten SiO₂ oder SiO₂/Al₂O₃-Träger.

DE 35 43 640 A1 empfiehlt alpha-Aluminiumoxid-geträgerte Pd-Katalysatoren für die Zersetzung reinen oder in Gasgemischen vorhandenen Lachgases zur Gewinnung von Atemluft in der Raumfahrt. Beispiel 4 beschreibt die Verwendung solcher Katalysatoren zur N20-Zerstörung in Luft mit 14% N₂O und 4% H₂O (gasförmig) bei Temperaturen von 495 °C bis 560 °C.

Insgesamt hängt die Eignung eines Katalysators sehr stark von der Art des behandelten N₂O enthaltenden Gasgemischs ab. Viele bekannte Katalysatoren entfalten erst bei sehr hohen Temperaturen eine ausreichende Wirkung, was zu einem sehr hohen Aufwand führt, da der das N₂O enthaltende Gasstrom zunächst erwärmt werden muss. In einigen Fällen ist es nötig, den Gasstrom mit Zusatzaufwand zu trocknen, um einen ausreichenden Umsatz im Sinne vollständiger Lachgaszerstörung zu erzielen. Es besteht mithin in diesem Bereich stets Bedarf nach Verfahren, die bei möglichst geringen Temperaturen N₂O wirksam zerstören, vor allem in Feuchte enthaltenden Gasgemischen.

Die Aufgabe der vorliegenden Erfindung ist demnach darin zu sehen, ein Niedertemperatur-Verfahren zur Lachgaszersetzung in realen, feuchten Gasen wie z.B. in Mischungen ausgeatmeter Luft und Narkosegasen, zur Verfügung zu stellen.

Überraschenderweise wurde gefunden, dass Pd auf Aluminiumoxid sich sehr gut eignet, um Lachgas in Luft mit hohem Feuchteanteil, insbesondere ausgeatmeter Luft enthaltenden Gasgemischen bei relativ geringen Temperaturen (bis 450 °C) zu zersetzen.

Die Aufgabe wurde durch eine Verwendung nach Anspruch 1 gelöst.

Die Erfindung betrifft demnach die Verwendung von Palladium auf Aluminiumoxid-Träger zur Zersetzung von z.B. in Narkosegasen enthaltenem Distickstoffmonoxid in sauerstoffhaltigen Gasgemischen mit Feuchtegehalt von bei Temperaturen unter 450°C, insbesondere bei 400-420°C. Die Palladiumbeladung des Katalysators liegt dabei bevorzugt bei bis zu 2 Gew.-% bezogen auf Al₂O₃.

Mit der erfindungsgemäßen Verwendung wird im Ergebnis ein Niedertemperatur-Verfahren zur Lachgaszersetzung in realen, feuchten Gasen wie z.B. in Mischungen ausgeatmeter Luft und Narkosegasen zur Verfügung gestellt.

Das sauerstoffhaltige Gasgemisch ist vorzugsweise Luft. Der Feuchtegehalt kann bei 5-20% liegen und beträgt in der Regel 5-10% H₂O. Die Palladiumbeladung des Katalysators beträgt im Allgemeinen bis zu 2 Gew.-% bezogen auf Al₂O₃.

Das folgende Ausführungsbeispiel erläutert die Erfindung näher. Teile und Prozentangaben beziehen sich wie in der übrigen Beschreibung auf das Gewicht, sofern nicht anders angegeben.

### Beispiel: Lachgaszersetzung einer feuchten Modellgasmischung

Bedingungen im Testversuch:
Raumgeschwindigkeit ¹: >= 4000 1/h
Gaszusammensetzung: N₂O = 500 ppm
   O₂= ca. 20%
   H₂O: 7,5 vol%
   Rest: N₂
Temperaturbereich: bis 450°C
N₂O-Zersetzung > 99% bei T < 450°C
Katalysator < 2% Pd auf Alumniumoxid
Form: Pellets, Kugeln, Stränge
Durchmesser < 10 mm
**¹Raumgeschwindigkeit (Katalysator)**
Quotient aus Abgasvolumenstrom und Katalysatorvolumen, Maß für die Belastung eines Katalysators. Die Raumgeschwindigkeit dient bei der Katalysatorentwicklung zur Ermittlung des erforderlichen Katalysatorvolumens. Von der Raumgeschwindigkeit hängt ab, wie lange die an der katalytischen Reaktion beteiligten Stoffe im Katalysator verweilen.

Die Gaszusammensetzung wurde bei 420 bis 450°C mit einer Raumgeschwindigkeit von 4000 1/h über den Katalysator geleitet. Es ergab sich eine vollständige Zersetzung des N₂O.

## Patentansprüche

1. Verwendung von Palladium auf Aluminiumoxid-Träger zur Zersetzung von Distickstoffmonoxid in sauerstoffhaltigen Gasgemischen mit Feuchtegehalt von 5 bis 20 % H₂O bei Temperaturen bis 450°C.

2. Verwendung nach Anspruch 1, bei Temperaturen von 400 bis 420°C.

3. Verwendung nach Anspruch 1 oder 2, wobei das sauerstoffhaltige Gasgemisch Luft ist.

4. Verwendung nach einem der Ansprüche 1 bis 3, wobei die Palladiumbeladung < 2 Gew.-% bezogen auf Al₂O₃ beträgt.

5. Verwendung nach einem der Ansprüche 1 bis 4, wobei der Feuchtegehalt bei 5-10% H₂O liegt.

## Claims

1. Use of palladium on aluminium oxide carrier for decomposing dinitrogen monoxide in oxygen-containing gas mixtures having a moisture content of 5 to 20% H₂O at temperatures up to 450°C.

2. Use according to claim 1, at temperatures of 400 to 420°C.

3. Use according to claim 1 or 2, wherein the oxygen-containing gas mixture is air.

4. Use according to any one of claims 1 to 3, wherein the palladium content is < 2 wt.-% with respect to Al₂O₃.

5. Use according to any one of the claims 1 to 4, whereby the moisture content is 5-10% of H₂O.

## Revendications

1. Utilisation de palladium sur support en oxyde d'aluminium pour la décomposition de protoxyde d'azote dans des mélanges gazeux contenant de l'oxygène et ayant une teneur en humidité de 5 à 20 % de H₂O à des températures allant jusqu'à 450°C.

2. Utilisation selon la revendication 1 à des températures de 400 à 420°C.

3. Utilisation selon la revendication 1 ou 2, le mélange gazeux contenant de l'oxygène étant de l'air.

4. Utilisation selon une des revendications 1 à 3, la charge de palladium étant < 2 % en poids par rapport à Al₂O₃.

5. Utilisation selon une des revendications 1 à 4, la teneur en humidité étant de 5 à 10 % de H₂O.
